(19) Europäisches Patentamt
European Patent Office
Office européen des brevets

(11) EP 4 209 620 A1

(12) **EUROPEAN PATENT APPLICATION**
published in accordance with Art. 153(4) EPC

(43) Date of publication:
**12.07.2023 Bulletin 2023/28**

(21) Application number: **21864416.9**

(22) Date of filing: **02.09.2021**

(51) International Patent Classification (IPC):
***C25B 9/23*** *(2021.01)* ***C25B 13/02*** *(2006.01)*
***C25B 13/04*** *(2021.01)* ***C25B 13/08*** *(2006.01)*

(52) Cooperative Patent Classification (CPC):
**C25B 9/23; C25B 13/02; C25B 13/04; C25B 13/08**

(86) International application number:
**PCT/JP2021/032352**

(87) International publication number:
**WO 2022/050363 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 JP 2020148732**

(71) Applicant: **AGC INC.**
**Chiyoda-ku,**
**Tokyo 1008405 (JP)**

(72) Inventors:
- **HAYABE, Shintaro**
  **Tokyo 100-8405 (JP)**
- **SUMIKURA, Kosuke**
  **Tokyo 100-8405 (JP)**
- **NISHIO, Takuo**
  **Tokyo 100-8405 (JP)**

(74) Representative: **Müller-Boré & Partner**
**Patentanwälte PartG mbB**
**Friedenheimer Brücke 21**
**80639 München (DE)**

# (54) MEMBRANE ELECTRODE ASSEMBLY, SOLID POLYMER ELECTROLYTE MEMBRANE, WATER ELECTROLYSIS SYSTEM AND ELECTROLYTIC HYDROGENATION SYSTEM

(57) To provide a membrane electrode assembly, a solid polymer electrolyte membrane, a water electrolysis apparatus, and an electrolytic hydrogenation apparatus, that can reduce the range of increase in electrolysis voltage even when the current density increases when applied to a water electrolysis apparatus or an electrolytic hydrogenation apparatus.

The membrane electrode assembly of the present invention comprises an anode having a catalyst layer, a cathode having a catalyst layer, and a solid polymer electrolyte membrane disposed between the anode and the cathode, wherein the solid polymer electrolyte membrane comprises a fluorinated polymer having ion-exchange groups and a woven fabric, wherein the aperture ratio of the woven fabric is at least 50%, and the ratio $TA_{AVE}/TB_{AVE}$ calculated from the average maximum membrane thickness $TA_{AVE}$ and the average minimum membrane thickness $TB_{AVE}$ of the solid polymer electrolyte membrane is at least 1.20.

Fig. 2

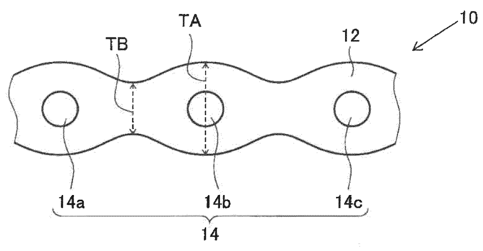


EP 4 209 620 A1

## Description

TECHNICAL FIELD

The present invention relates to a membrane electrode assembly, a solid polymer electrolyte membrane, a water electrolysis apparatus and an electrolytic hydrogenation apparatus.

BACKGROUND ART

A membrane electrode assembly containing a solid polymer electrolyte membrane can be applied to various applications, and various studies have been conducted. For example, the membrane electrode assembly is applied to a solid polymer electrolyte water electrolysis apparatus (Patent Document 1).

PRIOR ART DOCUMENT

PATENT DOCUMENT

Patent Document 1: WO2020/162511

DISCLOSURE OF INVENTION

TECHNICAL PROBLEM

A membrane electrode assembly is sometimes used not only in water electrolysis apparatus but also in electrolytic hydrogenation apparatus for toluene, etc. In recent years, there has been a need to further improve the performance of these apparatuses, specifically, to reduce the electrolysis voltage.

When the present inventors evaluated the water electrolysis apparatus having a membrane electrode assembly as described in Patent Document 1, they found that the range of increase in electrolysis voltage sometimes became large when the current density increased, and that there was room for improvement.

The present invention was made in view of the above circumstances and is concerned with providing a membrane electrode assembly, a solid polymer electrolyte membrane, a water electrolysis apparatus and an electrolytic hydrogenation apparatus, that can reduce the range of increase in electrolysis voltage even when the current density increases when applied to a water electrolysis apparatus or an electrolytic hydrogenation apparatus.

SOLUTION TO PROBLEM

The present inventors have studied the above problem intensively and as a result, have found that in a membrane electrode assembly containing a solid polymer electrolyte membrane, the desired effect can be obtained if the solid polymer electrolyte membrane contains a woven fabric with a predetermined aperture ratio and the ratio $TA_{AVE}/TB_{AVE}$ calculated from the average maximum membrane thickness $TA_{AVE}$ and the average minimum membrane thickness $TB_{AVE}$ of the solid polymer electrolyte membrane is at least a predetermined value, and thus have arrived at the present invention.

That is, the present inventors have found that the above problem can be solved by the following constructions.

[1] A membrane electrode assembly comprising an anode having a catalyst layer, a cathode having a catalyst layer, and a solid polymer electrolyte membrane disposed between the anode and the cathode, wherein

the solid polymer electrolyte membrane comprises a fluorinated polymer having ion-exchange groups and a woven fabric,
the woven fabric consists of yarns A extending in one direction and yarns B extending in a direction orthogonal to the yarns A,
the aperture ratio of said woven fabric is at least 50%, and
the maximum membrane thickness TA and the minimum membrane thickness TB of the solid polymer electrolyte membrane are measured at each of ten different cross-sections of the solid polymer electrolyte membrane when the solid polymer electrolyte membrane is cut in a direction parallel to the direction in which the yarns A in the solid polymer electrolyte membrane extend and at the midpoint between the yarns A, and
further, the maximum membrane thickness TA and the minimum membrane thickness TB of the solid polymer electrolyte membrane are measured at each of ten different cross-sections when the solid polymer electrolyte

membrane is cut in a direction parallel to the direction in which the yarns B in the solid polymer electrolyte membrane extend and at the midpoint between the yarns B, whereby
the ratio $TA_{AVE}/TB_{AVE}$ of the average maximum membrane thickness $TA_{AVE}$ obtained by arithmetically averaging the 20 TA obtained to the average minimum membrane thickness $TB_{AVE}$ obtained by arithmetically averaging the 20 TB obtained, is at least 1.20.

[2] The membrane electrode assembly according to [1], wherein the ion exchange capacity of the fluorinated polymer is from 0.90 to 2.00 meq/g dry resin.
[3] The membrane electrode assembly according to [1] or [2], wherein the denier count of the yarns A and the denier count of the yarns B are each independently from 15 to 50.
[4] The membrane electrode assembly according to any one of [1] to [3], wherein the ratio $TA_{AVE}/TB_{AVE}$ is at least 1.95.
[5] The membrane electrode assembly according to any one of [1] to [4], wherein said yarns A and said yarns B are each independently made of at least one material selected from the group consisting of polytetrafluoroethylene, a tetrafluoroethylene-perfluoroalkyl vinyl ether copolymer, polyether ether ketone and polyphenylene sulfide.
[6] The membrane electrode assembly according to any one of [1] to [5], wherein the densities of said yarns A and said yarns B are each independently from 70 to 150 yarns/inch.
[7] The membrane electrode assembly according to any one of [1] to [6], wherein the ion-exchange groups are sulfonic acid type functional groups.
[8] The membrane electrode assembly according to any one of [1] to [7], wherein the fluorinated polymer contains units based on a fluorinated olefin and units having sulfonic acid type functional groups and fluorine atoms.
[9] The membrane electrode assembly according to [8], wherein the fluorinated olefin is a $C_{2-3}$ fluoroolefin having at least one fluorine atom in the molecule.
[10] The membrane electrode assembly according to [8] or [9], wherein the units having sulfonic acid type functional groups and fluorine atoms are units represented by the following formula (1):

Formula (1): $-[CF_2-CF(L-(SO_3M)_n)]-$

(wherein, L is an n+1-valent perfluorohydrocarbon group that may contain an etheric oxygen atom, M is a hydrogen atom, an alkali metal or a quaternary ammonium cation, n is 1 or 2, and when n is 2, the multiple M may be the same or different.)
[11] A water electrolysis apparatus including a membrane electrode assembly as claimed in any one of [1] to [10].
[12] An electrolytic hydrogenation apparatus including a membrane electrode assembly as claimed in any one of [1] to [10].
[13] A solid polymer electrolyte membrane comprising a fluorinated polymer having ion-exchange groups and a woven fabric, wherein

the woven fabric consists of yarns A extending in one direction and yarns B extending in a direction orthogonal to the yarns A,
the aperture ratio of said woven fabric is at least 50%, and
the maximum membrane thickness TA and the minimum membrane thickness TB of the solid polymer electrolyte membrane are measured at each of ten different cross-sections of the solid polymer electrolyte membrane when the solid polymer electrolyte membrane is cut in a direction parallel to the direction in which the yarns A in the solid polymer electrolyte membrane extend and at the midpoint between the yarns A, and
further, the maximum membrane thickness TA and the minimum membrane thickness TB of the solid polymer electrolyte membrane are measured for each of ten different cross-sections of the solid polymer electrolyte membrane when the solid polymer electrolyte membrane is cut in a direction parallel to the direction in which the yarns B in the solid polymer electrolyte membrane extend and at the midpoint between the yarns B, whereby
the ratio $TA_{AVE}/TB_{AVE}$ of the average maximum membrane thickness $TA_{AVE}$ obtained by arithmetically averaging the 20 TA obtained to the average minimum membrane thickness $TB_{AVE}$ obtained by arithmetically averaging the 20 TB obtained, is at least 1.20.

[14] The solid polymer electrolyte membrane according to [13], wherein the ion exchange capacity of said fluorinated polymer is from 0.90 to 2.00 meq/g dry resin.
[15] The solid polymer electrolyte membrane according to [13] or [14], wherein the ratio $TA_{AVE}/TB_{AVE}$ is at least 1.95.
[16] The solid polymer electrolyte membrane according to any one of [13] to [15], to be used in a membrane electrode assembly.

## ADVANTAGEOUS EFFECTS OF INVENTION

According to the present invention, it is possible to provide a membrane electrode assembly, a solid polymer electrolyte membrane, a water electrolysis apparatus and an electrolytic hydrogenation apparatus, whereby, when applied to a water electrolysis apparatus or an electrolytic hydrogenation apparatus, the increase range of the electrolysis voltage can be made small even when the current density is increased.

## BRIEF DESCRIPTION OF DRAWINGS

Fig. 1 is a schematic cross-sectional view illustrating an example of a membrane electrode assembly of the present invention.
Fig. 2 is a schematic cross-sectional view illustrating an example at the time when a solid polymer electrolyte membrane contained in a membrane electrode assembly of the present invention, is cut in a direction parallel to the direction in which the yarns A extend.
Fig. 3 is a schematic cross-sectional view illustrating an example at the time when the solid polymer electrolyte membrane contained in a membrane electrode assembly of the present invention is cut in a direction parallel to the direction in which the yarns B extend.
Fig. 4 is a planar schematic view illustrating an example at the time when the woven fabric contained in the solid polymer electrolyte membrane in the present invention, is viewed toward the thickness direction of the solid polymer electrolyte membrane.
Fig. 5 is a schematic cross-sectional view illustrating another example at the time when a solid polymer electrolyte membrane contained in a membrane electrode assembly of the present invention, is cut in a direction parallel to the direction in which the yarns A extend.

## DESCRIPTION OF EMBODIMENTS

The definitions of the following terms apply throughout this specification and claims unless otherwise noted.
An "ion-exchange group" is a group that can exchange at least some of the ions contained in this group to other ions, such as the following sulfonic acid type functional group or carboxylic acid type functional group.
A "sulfonic acid type functional group" means a sulfonic acid group ($-SO_3H$) or a sulfonic acid base ($-SO_3M^2$, where $M^2$ is an alkali metal or quaternary ammonium cation).
A "carboxylic acid type functional group" means a carboxylic acid group (-COOH) or a carboxylic acid base ($-COOM^1$, where $M^1$ is an alkali metal or quaternary ammonium cation).
A "precursor membrane" is a membrane containing a polymer having groups that can be converted to ion-exchange groups.
The term "groups that can be converted to ion-exchange groups" means groups that can be converted to ion-exchange groups by treatment such as a hydrolysis treatment, acidification treatment or the like.
The term "groups that can be converted to sulfonic acid type functional groups" means groups that can be converted to sulfonic acid type functional groups by treatment such as a hydrolysis treatment, acidification treatment or the like.
A "unit" in a polymer means an atomic group derived from a single monomer molecule, which is formed by polymerization of the monomer. The unit may be an atomic group formed directly by the polymerization reaction, or it may be an atomic group in which a part of the atomic group is converted to another structure by treating the polymer obtained by the polymerization reaction.
A numerical range expressed by using " to " means a range that includes the numerical values listed before and after" to " as the lower and upper limits.

[Membrane electrode assembly]

The membrane electrode assembly of the present invention comprises an anode having a catalyst layer, a cathode having a catalyst layer, and a solid polymer electrolyte membrane disposed between the above anode and the above cathode. Further, the above solid polymer electrolyte membrane comprises a fluorinated polymer having ion-exchange groups and a woven fabric. Further, the above woven fabric comprises yarns A extending in one direction and yarns B extending in a direction orthogonal to the yarns A. The aperture ratio of the above woven fabric is at least 50%. The ratio $TA_{AVE}/TB_{AVE}$ calculated from the average maximum membrane thickness $TA_{AVE}$ and the average minimum membrane thickness $TB_{AVE}$ of the above solid polymer electrolyte membrane is at least 1.20.

When applied to a water electrolysis apparatus or an electrolytic hydrogenation apparatus, the membrane electrode assembly of the present invention can reduce the range of increase in electrolysis voltage even when the current density is increased. Although the details of the reason for this have not been clarified, it is assumed to be due to the following reasons.

When the ratio $TA_{AVE}/TB_{AVE}$ is at least 1.20, the surface of the solid polymer electrolyte membrane has an uneven structure with a predetermined height difference. It is assumed that the uneven structure on the surface of the solid polymer electrolyte membrane generates convection of the liquid supplied to the surface of the membrane electrode assembly and improves the diffusion of the liquid, resulting in a smaller increase in the electrolysis voltage even when the current density is increased.

Further, when a woven fabric is present in the solid polymer electrolyte membrane, the membrane resistance of the solid polymer electrolyte membrane may increase, resulting in a problem of high electrolysis voltage. To address this problem, it is assumed that the electrolysis voltage could be reduced by using a woven fabric with the specified aperture ratio.

Fig. 1 is a cross-sectional view illustrating an example of the membrane electrode assembly of the present invention. The membrane electrode assembly 20 comprises an anode 22 having a catalyst layer 26 and a gas diffusion layer 28, a cathode 24 having a catalyst layer 26 and a gas diffusion layer 28, and a solid polymer electrolyte membrane 10 disposed between the anode 22 and the cathode 24, in contact with the catalyst layers 26.

<Solid polymer electrolyte membrane>

Fig. 2 is a schematic cross-sectional view illustrating an example at the time when the solid polymer electrolyte membrane contained in the membrane electrode assembly of the present invention, is cut in a direction parallel to the direction in which the yarns A extend, and specifically, the cross-section which exposes when the solid polymer electrolyte membrane is cut at the A-A' line in Fig. 4, as described later. In the cross-section of the solid polymer electrolyte membrane 10 in Fig. 2, the electrolyte 12 containing the fluorinated polymer (I) and the yarns 14a, 14b and 14c disposed in the electrolyte 12, are exposed. The yarns 14a, 14b and 14c correspond to the yarns B constituting the woven fabric 14.

Fig. 3 is a schematic cross-sectional view illustrating an example at the time when the solid polymer electrolyte membrane contained in the membrane electrode assembly of the present invention, is cut in a direction parallel to the direction in which the yarns B extend, and specifically, the cross-section which exposes when the solid polymer electrolyte membrane is cut at the B-B' line in Fig. 4, as described later. In the cross-section of the solid polymer electrolyte membrane 10 in Fig. 3, the electrolyte 12 containing the fluorinated polymer (I) and the yarns 14A, 14B and 14C disposed in the electrolyte 12, are exposed. The yarns 14A, 14B and 14C correspond to the yarns A constituting the woven fabric 14.

Fig. 4 is a plan schematic view of the woven fabric 14 in the solid polymer electrolyte membrane 10 as viewed toward the membrane thickness direction. As shown in Fig. 4, the woven fabric 14 comprises yarns 14A, 14B and 14C, which are yarns A, and yarns 14a, 14b and 14c, which are yarns B that are orthogonal to yarns A.

The ratio $TA_{AVE}/TB_{AVE}$ in the solid polymer electrolyte membrane is at least 1.20, and from the viewpoint that the effect of the present invention is more excellent, at least 1.35 is preferred, at least 1.60 is more preferred, at least 1.95 is further preferred, and at least 2.10 is particularly preferred.

The upper limit of the ratio $TA_{AVE}/TB_{AVE}$ in the solid polymer electrolyte membrane is at most 3.00, preferably at most 2.50 and particularly preferably at most 2.30, from the viewpoint of uniformity of the catalyst layer coated on the uneven surface of the solid polymer electrolyte membrane.

The method of making the ratio $TA_{AVE}/TB_{AVE}$ to be at least 1.20 is not particularly limited, but, for example, a method of sandwiching the precursor membrane for the solid polymer electrolyte membrane by the low melting point films described below at the time of the production of the solid polymer electrolyte membrane, followed by heat pressing. The low melting point films thereby deform to follow the surface shape of the precursor membrane, so that a solid polymer electrolyte membrane having a concavo-convex structure on the surface is obtainable, where the area where the yarns A and B constituting the woven fabric are present is convex and the area where the yarns A and B are not present is concave.

The calculation method of the ratio $TA_{AVE}/TB_{AVE}$ in the solid polymer electrolyte membrane in the present invention will be described.

First, the maximum membrane thickness TA and the minimum membrane thickness TB of the solid polymer electrolyte membrane are measured for each of ten different cross-sections at the time when the solid polymer electrolyte membrane is cut in a direction parallel to the direction in which the yarns A in the solid polymer electrolyte membrane extend and at the midpoint between the yarns A.

Specifically, in the example in Fig. 4, the solid polymer electrolyte membrane 10 is cut at the A-A' line located at the midpoint between yarns 14A and 14B, which are yarns A. This exposes a cross-section of the solid polymer electrolyte membrane 10 as shown in Fig. 2. Similarly, the solid polymer electrolyte membrane 10 is cut at a position other than the midpoint between the yarns 14A and 14B (e.g. at the midpoint between the yarns 14B and 14C) to expose

a cross-section of the solid polymer electrolyte membrane 10. After obtaining ten different cross-sections in this manner, the maximum membrane thickness TA and the minimum membrane thickness TB are measured for every cross-section.

Further, the maximum membrane thickness TA and the minimum membrane thickness TB of the solid polymer electrolyte membrane are measured for each of ten different cross-sections at the time when the solid polymer electrolyte membrane is cut in a direction parallel to the direction in which the yarns B in the solid polymer electrolyte membrane extend and at the midpoint between the yarns B.

Specifically, in the example in Fig. 4, the solid polymer electrolyte membrane 10 is cut at the B-B' line located at the midpoint between the yarns 14a and 14b, which are yarns B. This exposes a cross-section of the solid polymer electrolyte membrane 10 as shown in Fig. 3. Similarly, the solid polymer electrolyte membrane 10 is cut at a position other than the midpoint between the yarns 14a and 14b (e.g. at the midpoint between the yarns 14b and 14c) to expose a cross-section of the solid polymer electrolyte membrane 10. After obtaining ten different cross-sections in this manner, the maximum membrane thickness TA and the minimum membrane thickness TB are measured for every cross-section.

Next, the average maximum membrane thickness $TA_{AVE}$ is obtained by arithmetically averaging the 20 TA obtained, and the average minimum membrane thickness $TB_{AVE}$ is obtained by arithmetically averaging the 20 TB obtained, and the ratio of the average maximum membrane thickness $TA_{AVE}$ to the average minimum membrane thickness $TB_{AVE}$ is taken as the ratio $TA_{AVE}/TB_{AVE}$.

Here, for the measurement of the membrane thickness in the solid polymer electrolyte membrane, a sample having the solid polymer electrolyte membrane dried at 90°C for 2 hours is employed.

Further, the maximum membrane thickness TA and the minimum membrane thickness TB are measured by using a magnified image (e.g. 100 magnifications) of a cross-section of the solid polymer electrolyte membrane taken by an optical microscope (product name "BX-51" manufactured by Olympus Corporation).

The average maximum membrane thickness $TA_{AVE}$ of the solid polymer electrolyte membrane is preferably from 60 to 200 μm, more preferably from 60 to 140 μm, further preferably from 60 to 120 μm, particularly preferably from 60 to 100 μm, from such a viewpoint that the electrolysis voltage can be reduced more.

The average minimum membrane thickness $TB_{AVE}$ of the solid polymer electrolyte membrane is preferably from 30 to 130 μm, more preferably from 30 to 100 μm, further preferably from 30 to 80 μm, particularly preferably from 30 to 50 μm, from such a viewpoint that the strength of the membrane electrode assembly can be more improved.

In the example in Fig. 2, in the cross-section of the solid polymer electrolyte membrane 10, the thickness of the solid polymer electrolyte membrane 10 gradually decreases in the direction from yarn 14a to yarn 14b to reach the position of the minimum membrane thickness TB, then the thickness of the solid polymer electrolyte membrane 10 gradually increases to the position of the maximum membrane thickness TA.

The cross-sectional shape of the solid polymer electrolyte membrane is not limited to the cross-sectional shape in Fig. 2, but may be, for example, a cross-sectional shape as shown in Fig. 5.

Fig. 5 is a cross-sectional view illustrating another example at the time when the solid polymer electrolyte membrane 10 is cut in a direction parallel to the direction in which the yarns A extend. In the example of Fig. 5, the thickness of the solid polymer electrolyte membrane 10 gradually decreases from the direction of the yarn 14a to the direction of the yarn 14b, reaching the position C1 where the minimum membrane thickness TB is reached, maintaining the minimum membrane thickness TB until the position C2, and then the thickness of the solid polymer electrolyte membrane 10 gradually increases until the position where the maximum membrane thickness TA is reached. In this way, in the cross-sectional shape of the solid polymer electrolyte membrane 10, there may be a flat area where the membrane thickness is uniform from the position C1 to the position C2.

(Woven fabric)

The aperture ratio of the woven fabric is at least 50%, and from such a viewpoint that the electrolysis voltage can be reduced more, at least 55% is more preferred, at least 60% is further preferred, and at least 70% is particularly preferred.

The upper limit of the aperture ratio of the woven fabric is preferably at most 90%, more preferably at most 80%, from such a viewpoint that the strength of the membrane electrode assembly is more excellent.

The aperture ratio of the woven fabric is calculated by the following formula (ε) based on the average diameter R1 of yarns and the average spacing P1 between adjacent yarns (hereinafter referred to also as "pitch P1").

Here, the average diameter R1 of yarns means the arithmetic average value of the diameters of 10 different yarns selected arbitrarily based on a magnified image (e.g. 100 magnifications) of the woven fabric surface obtained by using a microscope. Further, the pitch P1 means the arithmetic average value of 10 spacing points at different locations selected arbitrarily based on a magnified image (e.g. 100 magnifications) of the woven fabric surface obtained by using a microscope.

$$\text{Aperture ratio (\%) of woven fabric} = [P1/(P1+R1)]^2 \times 100 \quad (\varepsilon)$$

The denier count of yarns A and the denier count of yarns B constituting the woven fabric are each independently at least 2, and, from such a viewpoint that the strength and dimensional stability of the membrane electrode assembly will be more excellent, preferably at least 10 and particularly preferably at least 15.

The upper limit value for the denier count of yarns A and the denier count of yarns B constituting the woven fabric are, each independently, at most 60, more preferably at most 50, and particularly preferably at most 20, from such a viewpoint that the electrolysis voltage can be reduced more.

Here, the denier count is a value having the mass of 9000m of yarns expressed in grams (g/9000m).

The densities of yarns A and yarns B are, each independently, preferably at least 50 yarns/inch, more preferably at least 70 yarns/inch, and particularly preferably at least 90 yarns/inch, from such a viewpoint that the strength and dimensional stability of the membrane electrode assembly will be excellent, while preferably at most 200 yarns/inch, more preferably at most 150 yarns/inch, and particularly preferably at most 100 yarns/inch, from such a viewpoint that the electrolysis voltage can be reduced more.

Yarn A and yarn B may be composed of either a monofilament consisting of one filament or a multifilament consisting of two or more filaments, and the monofilament is preferred.

Yarn A and yarn B are, each independently, preferably made of at least one material selected from the group consisting of polytetrafluoroethylene (hereinafter referred to also as "PTFE"), a tetrafluoroethylene-perfluoroalkyl vinyl ether copolymer (hereinafter referred to also as "PFA"), polyether ether ketone (hereinafter referred to also as "PEEK") and polyphenylene sulfide (hereinafter referred to also as "PPS"), from such a viewpoint that the durability of the yarn will be more excellent.

Yarn A and yarn B are each preferably composed of slit yarn from such a viewpoint that the durability and strength of the yarn will be more excellent.

In the woven fabric, yarns A and yarns B are orthogonal to each other. Orthogonal means that the angle between yarns A and yarns B is 90±10 degrees.

Yarns A may be warp yarns or weft yarns of the woven fabric, but if yarns A are weft yarns, yarns B are warp yarns, and if yarns A are warp yarns, yarns B are weft yarns.

In a case where the material that constitutes the woven fabric is PTFE, the fabric weight of the woven fabric is preferably from 20 to 40 $g/m^2$, particularly preferably from 30 to 40 $g/m^2$, from such a viewpoint that the balance between the strength and the handling efficiency of the solid polymer electrolyte membrane will be excellent.

In a case where the material that constitutes the woven fabric is PFA, the fabric weight of the woven fabric is preferably from 10 to 30 $g/m^2$, particularly preferably from 10 to 20 $g/m^2$, from such a viewpoint that the balance between the strength and the handling efficiency of the solid polymer electrolyte membrane will be excellent.

In a case where the material that constitutes the woven fabric is PEEK, the fabric weight of the woven fabric is preferably from 5 to 40 $g/m^2$, particularly preferably from 5 to 30 $g/m^2$, from such a viewpoint that the balance between the strength and the handling efficiency of the solid polymer electrolyte membrane will be excellent.

In a case where the material that constitutes the woven fabric is PPS, the fabric weight of the woven fabric is preferably from 5 to 40 $g/m^2$, particularly preferably from 5 to 30 $g/m^2$, from such a viewpoint that the balance between the strength and the handling efficiency of the solid polymer electrolyte membrane will be excellent.

(Electrolyte)

The electrolyte contains a fluorinated polymer (I).

The ion exchange capacity of the fluorinated polymer (I) is preferably at least 0.90 meq/g dry resin, more preferably at least 1.10 meq/g dry resin, further preferably at least 1.15 meq/g dry resin, particularly preferably at least 1.20 meq/g dry resin, most preferably at least 1.25 meq/g dry resin, from such a viewpoint that the electrolysis voltage can be reduced more.

The upper limit value of the ion exchange capacity of the fluorinated polymer (I) is preferably at most 2.00 meq/g dry resin, more preferably at most 1.50 meq/g dry resin, particularly preferably at most 1.43 meq/g dry resin, from such a viewpoint that the solid polymer electrolyte membrane will be more excellent.

The fluorinated polymer (I) to be used in the solid polymer electrolyte membrane may be of one type, or two or more types may be used as laminated or mixed.

Although the solid polymer electrolyte membrane may contain polymers other than the fluorinated polymer (I), it is preferred that the polymer in the solid polymer electrolyte membrane is substantially composed of the fluorinated polymer (I). Substantially composed of a fluorinated polymer (I) is meant that the fluorinated polymer (I) content is at least 95 mass% to the total mass of polymers in the solid polymer electrolyte membrane. The upper limit of the fluorinated polymer (I) content may be 100 mass% to the total mass of polymers in the solid polymer electrolyte membrane.

Specific examples of other polymers other than fluorinated polymer (I) include one or more polyazole compounds selected from the group consisting of a polymer of a heterocyclic compound containing one or more nitrogen atoms in the ring, as well as a polymer of a heterocyclic compound containing one or more nitrogen atoms and oxygen and/or sulfur atoms in the ring.

Specific examples of polyazole compounds include polyimidazole compounds, polybenzimidazole compounds, polybenzobisimidazole compounds, polybenzoxazole compounds, polyoxazole compounds, polythiazole compounds, and polybenzothiazole compounds.

Further, from the viewpoint of the oxidation resistance of the solid polymer electrolyte membrane, as other polymers, polyphenylene sulfide resins and polyphenylene ether resins may also be mentioned.

The fluorinated polymer (I) has ion-exchange groups. As specific examples of ion-exchange groups, sulfonic acid type functional groups and carboxylic acid type functional groups may be mentioned, and sulfonic acid type functional groups are preferred, from such a viewpoint that the electrolysis voltage can be reduced more.

In the following, detailed descriptions will be made mainly about embodiments of a fluorinated polymer having sulfonic acid type functional groups (hereinafter referred to also as a "fluorinated polymer (S)").

The fluorinated polymer (S) preferably contains units based on a fluorinated olefin and units having sulfonic acid type functional groups and fluorine atoms.

As the fluorinated olefin, for example, a $C_{2-3}$ fluoroolefin having at least one fluorine atom in the molecule may be mentioned. Specific examples of the fluoroolefin include tetrafluoroethylene (hereinafter referred to also as "TFE"), chlorotrifluoroethylene, vinylidene fluoride, vinyl fluoride, and hexafluoropropylene. Among them, TFE is preferred from such a viewpoint that it is excellent in the cost of monomer production, reactivity with other monomers, and properties of the obtainable fluorinated polymer (S).

As the fluorinated olefin, one type may be used alone, or two or more types may be used in combination.

As the units having sulfonic acid type functional groups and fluorine atoms, units represented by the following formula (1) are preferred.

Formula (1): $-[CF_2-CF(-L-(SO_3M)_n)]-$

In the formula, L is an n+1-valent perfluorohydrocarbon group which may contain an etheric oxygen atom.

The etheric oxygen atom may be located at the terminal or between carbon-carbon atoms in the perfluorohydrocarbon group.

The number of carbon atoms in the n+1-valent perfluorohydrocarbon group is preferably at least 1, particularly preferably at least 2, and preferably at most 20, particularly preferably at most 10.

As L, an n+1-valent perfluoroaliphatic hydrocarbon group which may contain an etheric oxygen atom is preferred, and a divalent perfluoroalkylene group which may contain an etheric oxygen atom, as an embodiment of n=1, or a trivalent perfluoroaliphatic hydrocarbon group which may contain an etheric oxygen atom, as an embodiment of n=2, is particularly preferred.

The above divalent perfluoroalkylene group may be linear or branched-chain.

M is a hydrogen atom, an alkali metal or a quaternary ammonium cation.

n is 1 or 2. When n is 2, the plurality of M may be the same or different.

As the units represented by the formula (1), units represented by the formula (1-1), units represented by the formula (1-2), units represented by the formula (1-3) or units represented by the formula (1-4), are preferred.

Formula (1-1): $-[CF_2-CF(-O-R^{f1}-SO_3M)]-$

Formula (1-2): $-[CF_2-CF(-R^{f1}-SO_3M)]-$

Formula (1-3):

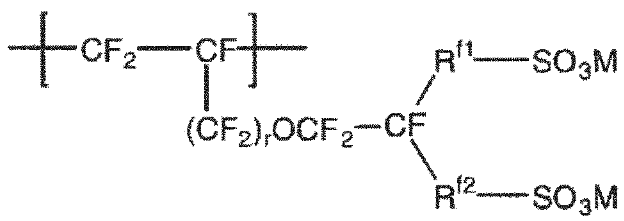

Formula (1-4):

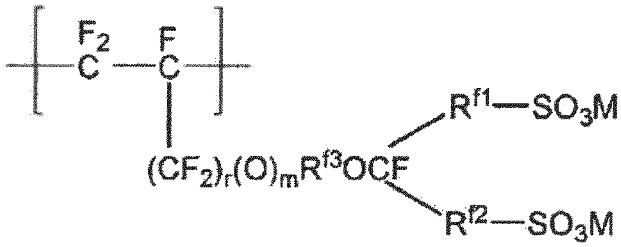

$R^{f1}$ is a perfluoroalkylene group which may contain an oxygen atom between carbon-carbon atoms. The number of carbon atoms in the above perfluoroalkylene group is preferably at least 1, particularly preferably at least 2, and preferably at most 20, particularly preferably at most 10.

$R^{f2}$ is a single bond or a perfluoroalkylene group which may contain an oxygen atom between carbon-carbon atoms. The number of carbon atoms in the above perfluoroalkylene group is preferably at least 1, particularly preferably at least 2, and preferably at most 20, particularly preferably at most 10.

$R^{f3}$ is a single bond or a perfluoroalkylene group which may contain an oxygen atom between carbon-carbon atoms. The number of carbon atoms in the above perfluoroalkylene group is preferably at least 1, particularly preferably at least 2, and preferably at most 20, particularly preferably at most 10.

r is 0 or 1.
m is 0 or 1.

M is a hydrogen atom, an alkali metal or a quaternary ammonium cation.

As the units represented by the formula (1-1) and the units represented by the formula (1-2), units represented by the formula (1-5) are more preferred.

Formula (1-5): $-[CF_2-CF(-(CF_2)_x-(OCF_2CFY)_y-O-(CF_2)_z-SO_3M)]-$

x is 0 or 1, y is an integer of from 0 to 2, z is an integer of from 1 to 4, and Y is F or $CF_3$. M is as described above.

As specific examples of the units represented by the formula (1-1), the following units may be mentioned. In the formulas, w is an integer of from 1 to 8, and x is an integer of from 1 to 5. The definition of M in the formulas is as defined above.

$-[CF_2-CF(-O-(CF_2)_w-SO_3M)]-$

$-[CF_2-CF(-O-CF_2CF(CF_3)-O-(CF_2)_w-SO_3M)]-$

$-[CF_2-CF(-(O-CF_2CF(CF_3))_x-SO_3M)]-$

As specific examples of the units represented by the formula (1-2), the following units may be mentioned. In the formulas, w is an integer of from 1 to 8. The definition of M in the formulas is as defined above.

$-[CF_2-CF(-(CF_2)_w-SO_3M)]-$

$-[CF_2-CF(-CF_2-O-(CF_2)_w-SO_3M)]-$

As the units represented by the formula (1-3), units represented by the formula (1-3-1) are preferred. The definition of M in the formula is as defined above.

Formula 1-3-1:

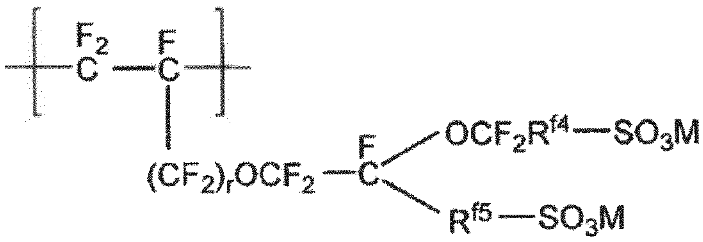

$R^{f4}$ is a $C_{1-6}$ linear perfluoroalkylene group, and $R^{f5}$ is a single bond or a $C_{1-6}$ linear perfluoroalkylene group which may contain an oxygen atom between carbon-carbon atoms. The definitions of r and M are as defined above.

As specific examples of the units represented by the formula (1-3-1), the following may be mentioned.

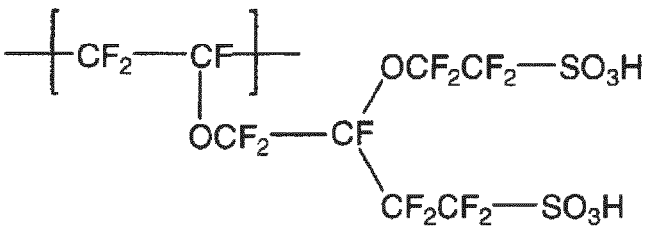

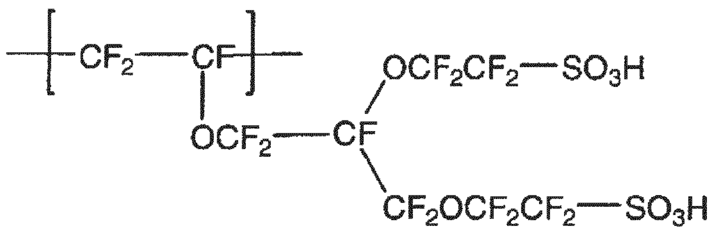

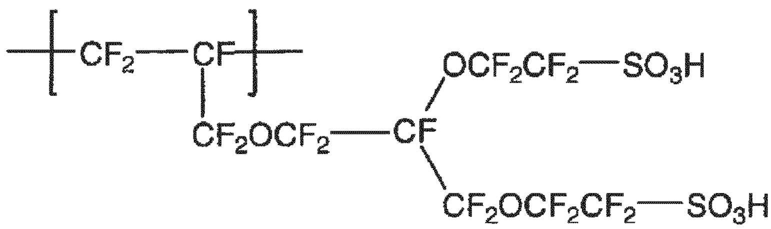

As the units represented by the formula (1-4), units represented by the formula (1-4-1) are preferred. The definitions of $R^{f1}$, $R^{f2}$ and M in the formula are as defined above.

Formula (1-4-1):

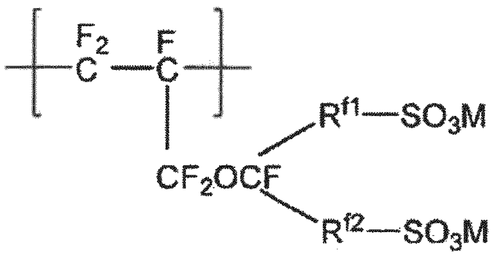

As specific examples of the units represented by the formula (1-4-1), the following may be mentioned.

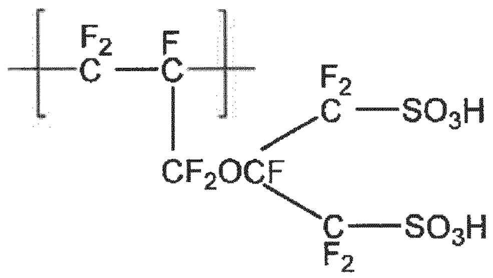

As the units having sulfonic acid type functional groups and fluorine atoms, one type may be used alone, or two or more types may be used in combination.

In the case of a fluorinated polymer having carboxylic acid type functional groups (hereinafter referred to as a "fluorinated polymer (C)"), one containing units based on a fluorinated olefin and units having carboxylic acid type functional groups and fluorine atoms, is preferred.

As specific examples of the fluorinated polymer (C), the following compounds may be mentioned.

$CF_2=CFOCF_2CF(CF_3)OCF_2CF_2COOCH_3$,

$CF_2=CFOCF_2CF_2COOCH_3$,

$CF_2=CFOCF_2CF_2CF_2COOCH_3$,

$CF_2=CFOCF_2CF_2CF_2OCF_2CF_2COOCH_3$,

$CF_2=CFOCF_2CF_2CF_2CF_2CF_2COOCH_3$,

$CF_2=CFOCF_2CF(CF_3)OCF_2CF_2CF_2COOCH_3$.

The fluorinated polymer (I) may contain units based on other monomers, other than units based on a fluorinated olefin and units having sulfonic acid type functional groups and fluorine atoms.

As specific examples of other monomers, $CF_2=CFR^{f6}$ (where $R^{f6}$ is a $C_{2-10}$ perfluoroalkyl group), $CF_2=CF-OR^{f7}$ (where $R^{f7}$ is a $C_{1-10}$ perfluoroalkyl group) and $CF_2=CFO(CF_2)_v CF=CF_2$ (where v is an integer of from 1 to 3) may be mentioned.

The content of the units based on other monomers is preferably at most 30 mass% to all units in the fluorinated polymer (I), from the viewpoint of maintaining the ion exchange performance.

The solid polymer electrolyte membrane may have a monolayer or multilayer structure. In the case of a multilayer structure, for example, an embodiment wherein a plurality of layers containing the fluorinated polymer (I) and having different ion exchange capacities are laminated, may be mentioned.

(Production method for solid polymer electrolyte membrane)

As a method for producing a solid polymer electrolyte membrane, a method may be mentioned, in which a membrane (hereinafter referred to also as a "precursor membrane") containing a polymer of a fluorinated monomer having groups which can be converted to ion-exchange groups (hereinafter referred to also as a "fluorinated polymer (I')") and a woven fabric, is produced, and then the groups which can be converted to ion-exchange groups in the precursor membrane, are converted to ion-exchange groups.

Here, a suitable embodiment for the method of producing the precursor membrane is, for example, a method of sandwiching both sides of a laminate in which the fluorinated polymer (I') is placed on both sides of a woven fabric, by transfer base materials such as low melting point films with a melting point of from 70 to 180°C, followed by heat pressing.

As specific examples of the low melting point films, polyethylene films, polypropylene films, and polystyrene films may be mentioned.

The form of the woven fabric is as described above.

The fluorinated polymer (I') is preferably a polymer (hereinafter referred to also as a "fluorinated polymer (S')") of a fluorinated monomer (hereinafter referred to also as a "fluorinated monomer (S')") having a group which can be converted to a sulfonic acid type functional group, and particularly preferably a copolymerized polymer of a fluorinated olefin and a monomer having a group which can be converted to a sulfonic acid type functional group and a fluorine atom.

In the following, the fluorinated polymer (S') will be described in detail.

As a method of copolymerization for the fluorinated polymer (S'), a known method such as solution polymerization, suspension polymerization, emulsion polymerization, or the like, may be employed.

As the fluorinated olefin, those exemplified earlier may be mentioned, and TFE is preferred from such a viewpoint that it is excellent in the cost of monomer production, reactivity with other monomers, and properties of the obtainable fluorinated polymer (S).

As the fluorinated olefin, one type may be used alone, or two or more types may be used in combination.

As the fluorinated monomer (S'), a compound which has at least one fluorine atom in the molecule, has an ethylenic double bond, and has a group which can be converted to a sulfonic acid type functional group, may be mentioned.

As the fluorinated monomer (S'), a compound represented by the formula (2) is preferred from such a viewpoint that it is excellent in the cost of monomer production, reactivity with other monomers, and properties of the obtainable fluorinated polymer (S).

Formula (2): $CF_2=CF\text{-}L\text{-}(A)_n$

The definitions of L and n in the formula (2) are as defined above.

A is a group which can be converted to a sulfonic acid type functional group. As the functional group which can be converted to a sulfonic acid type functional group, a functional group which can be converted to a sulfonic acid type functional group by hydrolysis is preferred. As specific examples of the group which can be converted to a sulfonic acid type functional group, $-SO_2F$, $-SO_2Cl$ and $-SO_2Br$ may be mentioned.

As the compound represented by the formula (2), a compound represented by the formula (2-1), a compound represented by the formula (2-2), a compound represented by the formula (2-3), and a compound represented by the formula (2-4) are preferred.

Formula (2-1): $CF_2=CF\text{-}O\text{-}R^{f1}\text{-}A$

Formula (2-2): $CF_2=CF\text{-}R^{f1}\text{-}A$

Formula (2-3):

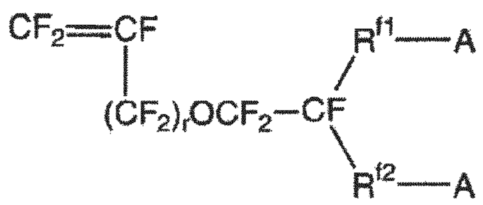

The definitions of $R^{f1}$, $R^{f2}$, r and A in the formulas are as defined above.

Formula (2-4):

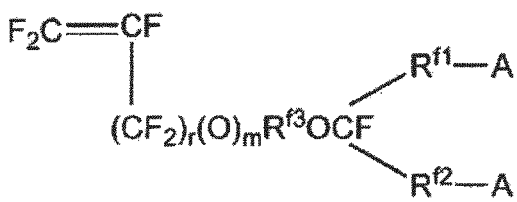

The definitions of $R^{f1}$, $R^{f2}$, $R^{f3}$, r, m and A in the formula are as defined above.

As the compound represented by the formula (2-1) and the compound represented by the formula (2-2), a compound represented by the formula (2-5) is preferred.

Formula (2-5): $CF_2=CF\text{-}(CF_2)_x\text{-}(OCF_2CFY)_y\text{-}O\text{-}(CF_2)_z\text{-}SO_3M$

The definitions of M, x, y, z and Y in the formula are as defined above.

As specific examples of the compound represented by the formula (2-1), the following compounds may be mentioned. In the formulas, w is an integer of from 1 to 8, and x is an integer of from 1 to 5.

$CF_2=CF-O-(CF_2)_w-SO_2F$

$CF_2=CF-O-CF_2CF(CF_3)-O-(CF_2)_w-SO_2F$

$CF_2=CF-[O-CF_2CF(CF_3)]_x-SO_2F$

As specific examples of the compound represented by the formula (2-2), the following compounds may be mentioned. In the formulas, w is an integer of from 1 to 8.

$CF_2=CF-(CF_2)_w-SO_2F$

$CF2=CF-CF2-O-(CF_2)_w-SO_2F$

As the compound represented by the formula (2-3), a compound represented by the formula (2-3-1) is preferred.

Formula (2-3-1):

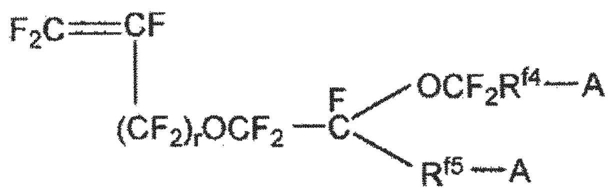

The definitions of $R^{f4}$, $R^{f5}$, r and A in the formula are as defined above.

As specific examples of the compound represented by the formula (2-3-1), the following may be mentioned.

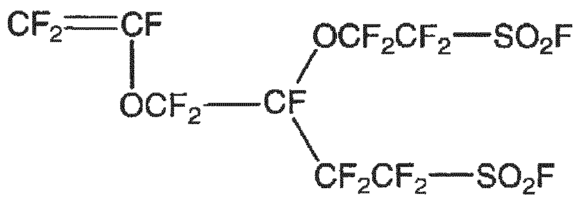

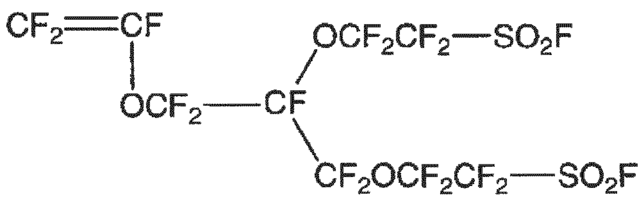

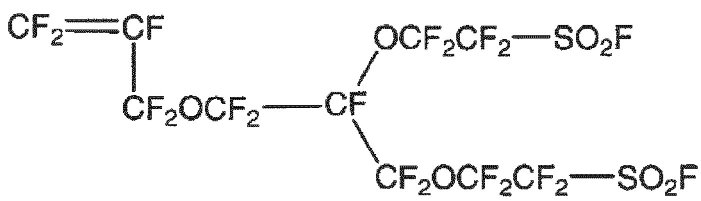

As the compound represented by the formula (2-4), a compound represented by the formula (2-4-1) is preferred.

Formula (2-4-1):

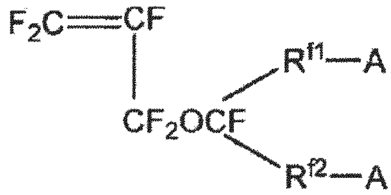

The definitions of $R^{f1}$, $R^{f2}$ and A in the formula are as defined above.

As specific examples of the compound represented by the formula (2-4-1), the following may be mentioned.

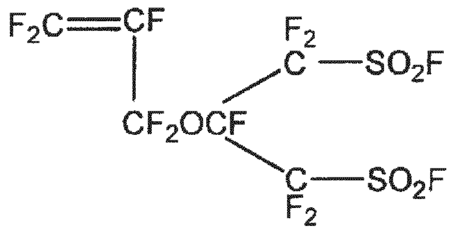

As the fluorinated monomer (S'), one type may be used alone, or two or more types may be used in combination.

For the production of a fluorinated polymer (S'), other monomers may be used in addition to the fluorinated olefin and the fluorinated monomer (S'). As such other monomers, those exemplified above may be mentioned.

The ion exchange capacity of the fluorinated polymer (I') can be adjusted by changing the content of groups which can be converted to ion-exchange groups in the fluorinated polymer (I').

As a specific example of the production method for the precursor membrane, an extrusion method may be mentioned. More specifically, a method may be mentioned, in which a membrane (I') consisting of a fluorinated polymer (I') is formed, and then, the membrane (I'), a woven fabric, and the membrane (I') are arranged in this order, and they are laminated by using a stacking roll or a vacuum stacking device.

As a specific example of the method for converting groups which can be converted to ion-exchange groups in the precursor film, a method of applying a hydrolysis treatment or acidification treatment to the precursor membrane may be mentioned.

Among them, the method of contacting the precursor membrane with an alkaline aqueous solution is particularly preferred.

As specific examples of the method of contacting the precursor membrane with the alkaline aqueous solution, a method of immersing the precursor membrane in the alkaline aqueous solution and a method of spray coating the precursor membrane surface with the alkaline aqueous solution, may be mentioned.

The temperature of the alkaline aqueous solution is preferably from 30 to 100°C, particularly preferably from 40 to 100°C. The contact time between the precursor membrane and the alkaline aqueous solution is preferably from 3 to 150 minutes, particularly preferably from 5 to 50 minutes.

The alkaline aqueous solution preferably contains an alkali metal hydroxide, a water-soluble organic solvent and water.

As the alkali metal hydroxide, sodium hydroxide and potassium hydroxide may be mentioned.

In this specification, a water-soluble organic solvent is an organic solvent which is readily soluble in water, and specifically, an organic solvent with a solubility of 0.1 g or more in 1,000 ml (20°C) of water is preferred, and an organic solvent with a solubility of 0.5 g or more is particularly preferred. The water-soluble organic solvent preferably contains at least one type selected from the group consisting of a non-protonic organic solvent, an alcohol and an amino alcohol, and it is particularly preferred to contain a non-protonic organic solvent.

As the water-soluble organic solvent, one type may be used alone, or two or more types may be used in combination.

As specific examples of the non-protonic organic solvent, dimethyl sulfoxide, N,N-dimethylformamide, N,N-dimethylacetamide, N-methyl-2-pyrrolidone and N-ethyl-2-pyrrolidone may be mentioned, and dimethyl sulfoxide is preferred.

As specific examples of the alcohol, methanol, ethanol, isopropanol, butanol, methoxyethoxyethanol, butoxyethanol, butylcarbitol, hexyloxyethanol, octanol, 1-methoxy-2-propanol and ethylene glycol may be mentioned.

As specific examples of the aminoalcohol, ethanolamine, N-methyl ethanolamine, N-ethyl ethanolamine, 1-amino-2-propanol, 1-amino-3-propanol, 2-aminoethoxyethanol, 2-amino thioethoxyethanol and 2-amino-2-methyl-1-propanol may be mentioned.

The concentration of the alkali metal hydroxide in the alkaline aqueous solution is preferably from 1 to 60 mass%, particularly preferably from 3 to 55 mass%.

The concentration of the water-soluble organic solvent in the alkaline aqueous solution is preferably from 1 to 60 mass%, particularly preferably from 3 to 55 mass%.

The concentration of water is preferably from 39 to 80 mass% in the alkaline aqueous solution.

After contact of the precursor membrane with the alkaline aqueous solution, treatment to remove the alkaline aqueous solution may be performed. As a method of removing the alkaline aqueous solution, for example, a method of washing the precursor membrane contacted with the alkaline aqueous solution, with water, may be mentioned.

After contact of the precursor membrane with the alkaline aqueous solution, the obtained membrane may be contacted with an acidic aqueous solution to convert the ion-exchange groups to the acid form.

As a specific example of the method of contacting the precursor membrane with the acidic aqueous solution, a method of immersing the precursor membrane in the acidic aqueous solution, or a method of spray coating the precursor membrane surface with the acidic aqueous solution, may be mentioned.

The acid aqueous solution preferably contains an acid component and water.

As a specific example of the acid component, hydrochloric acid or sulfuric acid may be mentioned.

<Anode and cathode>

The anode and the cathode each have a catalyst layer. In the example in Fig. 1, the anode 22 and the cathode 24 each have a catalyst layer 26 and a gas diffusion layer 28.

As a specific example of the catalyst layer, a layer containing a catalyst and a polymer having ion-exchange groups may be mentioned.

As specific examples of the catalyst, a supported catalyst having a catalyst containing platinum, a platinum alloy or platinum having a core-shell structure supported on a carbon carrier, an iridium oxide catalyst, an alloy containing iridium oxide, and a catalyst containing iridium oxide having a core-shell structure, may be mentioned. As the carbon carrier, carbon black powder may be mentioned.

As the polymer having ion-exchange groups, a fluorinated polymer having ion-exchange groups may be mentioned.

The gas diffusion layer has a function of diffusing gas uniformly to the catalyst layer and a function as a current collector. As specific examples of the gas diffusion layer, carbon paper, carbon cloth and carbon felt may be mentioned.

The gas diffusion layer is preferably one treated for water repellency by PTFE or the like.

In the membrane electrode assembly in Fig. 1, the gas diffusion layer 28 is contained, but the gas diffusion layer is an optional component and may not be contained in the membrane electrode assembly.

The membrane thicknesses of the anode and the cathode are each independently preferably from 5 to 100 $\mu$m, more preferably from 5 to 50 $\mu$m, further preferably from 5 to 30 $\mu$m, particularly preferably from 5 to 15 $\mu$m, from such a viewpoint that the effect of the present invention will be more excellent.

The membrane thicknesses of the anode and the cathode are measured by using images obtained by measuring by an optical microscopy of cross-sections cut toward the membrane thickness direction of the membrane electrode assembly and are the arithmetic average values at optional 20 locations.

<Method for producing membrane electrode assembly>

As a method for producing a membrane electrode assembly, for example, a method of forming catalyst layers on a solid polymer electrolyte membrane and further sandwiching the obtained assembly by gas diffusion layers, and a method of forming a catalyst layer on a gas diffusion layer to form electrodes (anode, cathode) and sandwiching a solid polymer electrolyte membrane with such electrodes, may be mentioned.

Here, as the method of forming the catalyst layer, a method of applying a coating liquid for forming the catalyst layer at a predetermined position and drying it as the case requires, may be mentioned. The coating liquid for forming the catalyst layer is a liquid having a polymer having ion-exchange groups and a catalyst dispersed in a dispersant.

<Applications>

The membrane electrode assembly of the present invention can be used in a water electrolysis apparatus (specifically, a solid polymer water electrolysis apparatus). Further, the membrane electrode assembly of the present invention can also be used as a diaphragm in an electrolytic hydrogenation apparatus for an aromatic compound (e.g. toluene).

[Water electrolysis apparatus]

The water electrolysis apparatus of the present invention contains the membrane electrode assembly as described above. Since the water electrolysis apparatus of the present invention contains the above-described membrane electrode assembly, the increase range of the electrolysis voltage is small even when the current density is increased.
The water electrolysis apparatus may have the same construction as known water electrolysis apparatuses, except that it contains the above-described membrane electrode assembly.

[Electrolytic hydrogenation apparatus]

The electrolytic hydrogenation apparatus of the present invention contains the above-described membrane electrode assembly. The electrolytic hydrogenation apparatus of the present invention can have the same construction as known electrolytic hydrogenation apparatuses, except that it contains the above-described membrane electrode assembly.

[Solid polymer electrolyte membrane]

The solid polymer electrolyte membrane of the present invention is a solid polymer electrolyte membrane containing a fluorinated polymer having ion-exchange groups and a woven fabric.
The above woven fabric comprises yarns A extending in one direction and yarns B extending in a direction orthogonal to the yarns A, and the aperture ratio of the above woven fabric is at least 50%. Further, the ratio $TA_{AVE}/TB_{AVE}$ calculated from the average maximum membrane thickness $TA_{AVE}$ and the average minimum membrane thickness $TB_{AVE}$ of the above solid polymer electrolyte membrane is at least 1.20.
The solid polymer electrolyte membrane of the present invention is suitable for a solid polymer electrolyte membrane contained in the above-described membrane electrode assembly, and when applied to a water electrolysis apparatus or an electrolytic hydrogenation apparatus, the increase in electrolysis voltage can be reduced even when the current density is increased.
The description of the suitable solid polymer electrolyte membrane of the present invention is omitted since it is similar to the solid polymer electrolyte membrane contained in the membrane electrode assembly of the present invention as described above.

EXAMPLES

In the following, the present invention will be described in detail with reference to Examples. Ex. 1 to Ex. 4 are Examples of the present invention, and Ex. 5 to Ex. 7 are Comparative Examples. However, the present invention is not limited to these Examples.

[Membrane thickness]

The average maximum membrane thickness $TA_{AVE}$, the average minimum membrane thickness $TB_{AVE}$ and the ratio $TA_{AVE}/TB_{AVE}$ of the solid polymer electrolyte membrane were calculated in accordance with the methods described in the above-described section for description of the solid polymer electrolyte membrane.

[Ion exchange capacity of fluorinated polymer]

The fluorinated polymer was placed in a glove box with dry nitrogen flowing through it for 24 hours, and the dry mass of the fluorinated polymer was measured. Then, the fluorinated polymer was immersed in a 2 mol/L sodium chloride solution at 60°C for 1 hour. After washing the fluorinated polymer with ultrapure water, it was taken out, and the ion exchange capacity (meq/g dry resin) of the fluorinated polymer was determined by titrating the solution in which the fluorinated polymer was immersed, with a 0.1 mol/L sodium hydroxide solution.

[Fabric weight of woven fabric]

The woven fabric raw material used was cut into a 20 $\times$ 20 cm size and its mass was measured. The above measurement was performed five times, and the average value was used as the basis for determining the fabric weight ($g/m^2$) of the woven fabric.

[Densities of warp yarns and weft yarns constituting the woven fabric]

The densities of warp yarns and weft yarns constituting the woven fabric were calculated according to the following method. For each of the warp yarns and the weft yarns, the average value of five measurements of the length of 10 yarns was calculated as the density (yarns/inch), from the observation image of an optical microscope.

[Aperture ratio of woven fabric]

Calculated in accordance with the method described in the above section for description of the woven fabric, by using a sample obtained by cutting the woven fabric raw material into a 20 × 20 cm size.

[Denier counts of warp yarns and weft yarns constituting the woven fabric]

The denier counts of warp yarns and weft yarns constituting the woven fabric were calculated in accordance with the following method. By randomly selecting five aperture areas, the aperture ratio was calculated from the observed images of the optical microscope, and the average value was used as the aperture ratio.

[Evaluation test for electrolysis voltage]

A polymer (ion exchange capacity: 1.10 meq/g dry resin) obtained by copolymerizing TFE and the monomer (X) described below, followed by hydrolysis and acid treatment, was dispersed in a water/ethanol = 40/60 (mass%) solvent at a solid concentration of 25.8% to obtain a dispersion (hereinafter referred to also as a "dispersion X"). To the obtained dispersion liquid X (19.0 g), ethanol (0.52 g) and water (3.34 g) were added, and an iridium oxide catalyst (manufactured by Tanaka Kikinzoku Kogyo K.K.) (13.0 g) containing 76 mass% of iridium in the dispersion, was also added. The obtained mixture was treated in a planetary bead mill (rotation speed 300 rpm) for 30 minutes, then water (4.49 g) and ethanol (4.53 g) were added, and further treated in a planetary bead mill (rotation speed 200 rpm) for 60 minutes to obtain an anode catalyst ink with a solid content of 40 mass%.

On one surface of the solid polymer electrolyte membrane obtained by the procedure described below, the anode catalyst ink was applied by a bar coater to bring iridium to be 2.0 mg/$cm^2$, dried at 80°C for 10 minutes, and then heat treated at 150°C for 15 minutes to obtain an electrolyte membrane provided with an anode catalyst layer.

To a supported catalyst ("TEC10E50E" manufactured by Tanaka Kikinzoku Kogyo K.K.) (11 g) having 46 mass% of platinum supported on carbon powder, water (59.4 g) and ethanol (39.6 g) were added, followed by mixing and pulverization by using an ultrasonic homogenizer to obtain a dispersion of the catalyst.

To the dispersion of the catalyst, a mixture (29.2 g) having the dispersion X (20.1 g), ethanol (11 g) and Zeorora-H (manufactured by ZEON Corporation) (6.3 g) preliminarily mixed and kneaded, was added. Further, to the obtained dispersion, water (3.66 g) and ethanol (7.63 g) were added, followed by mixing by using a paint conditioner for 60 minutes to obtain a cathode catalyst ink with a solid content concentration of 10.0 mass%.

The cathode catalyst ink was applied to an ETFE sheet by a die coater, dried at 80°C, and further heat treated at 150°C for 15 minutes to obtain a cathode catalyst layer decal with a platinum content of 0.4 mg/$cm^2$.

The surface of the electrolyte membrane with the anode catalyst layer, on which no anode catalyst layer is formed, and the surface of the cathode catalyst layer decal, on which the catalyst layer is present, were faced to each other, and heated and pressed under conditions of a pressing temperature of 150°C, a pressing time of 2 minutes and a pressure of 3 MPa to bond the anode catalyst layer-attached electrolyte membrane and the cathode catalyst layer, and then the temperature was lowered to 70°C and the pressure was released, whereupon the ETFE sheet of the cathode catalyst layer decal was peeled off to obtain a membrane electrode assembly with an electrode area of 25 $cm^2$.

The membrane electrode assembly obtained by the above procedure was heat-treated at 150°C for 15 minutes and then set in a water electrolysis evaluation jig EH50-25 (manufactured by Greenlight innovation).

Next, first, in order to sufficiently hydrate the solid polymer electrolyte membrane and both electrode ionomers, pure water with a conductivity of at most 1.0 μS/cm at a temperature of 80°C under normal pressure was supplied to the anode side and the cathode side at a flow rate of 50 mL/min for 12 hours. Then, the cathode side was purged with nitrogen.

After the nitrogen purge, to the anode side, pure water with a conductivity of at most 1.0 μS/cm at a temperature of 80°C under normal pressure was supplied at a flow rate of 50 mL/min, and while the gas pressure formed on the cathode side was kept at atmospheric pressure, the current was increased in steps of 2.5 A, in the range of from 0 to 50 A (current density of from 0 to 2 A/$cm^2$) by a direct current power source PWR1600L manufactured by Kikusui Electronics Corporation. At each stage, the current was held for 10 minutes, and the electrolysis voltage Vx (unit V) at a current density of 2 A/$cm^2$ and the electrolysis voltage Vy (unit V) at a current density of 4 A/$cm^2$ were measured and evaluated by the following standards.

| | |
|---|---|
| ◎: | Vy-Vx ≤30 |
| ○: | 30<Vy-Vx≤50 |
| ×: | 50<Vy-Vx |

[Production of fluorinated polymer (S'-1)]

$CF_2=CF_2$ and a monomer (X) represented by the following formula (X) were copolymerized to obtain a fluorinated polymer (S'-1) (ion exchange capacity: 1.25 meq/g dry resin).

$$CF_2=CF\text{-}O\text{-}CF_2CF(CF_3)\text{-}O\text{-}CF_2CF_2\text{-}SO_2F \qquad (X)$$

Here, the ion exchange capacity described in the above [Production of fluorinated polymer (S'-1)] represents the ion exchange capacity of the fluorinated polymer obtainable by hydrolyzing the fluorinated polymer (S'-1) by the procedure as described below.

[Production of film-attached base material Y1]

The fluorinated polymer (S'-1) was deposited by a melt-extrusion method on a base material consisting of a linear low-density polyethylene (LLDPE) film (melting point: 110 to 120°C) to obtain a film-attached base material Y1 having a film α1 (membrane thickness: 45 μm) consisting of the fluorinated polymer (S'-1) formed on the base material.

[Production of film-attached base material Y2]

The fluorinated polymer (S'-1) was deposited by a melt-extrusion method on a base material consisting of a linear low-density polyethylene (LLDPE) film (melting point: 110 to 120°C) to obtain a film-attached base material Y2 having a film α2 (membrane thickness: 30 μm) consisting of the fluorinated polymer (S'-1) formed on the base material.

[Production of film-attached base material Y3]

The fluorinated polymer (S'-1) was deposited by a melt-extrusion method on a base material consisting of a linear low-density polyethylene (LLDPE) film (melting point: 110 to 120°C) to obtain a film-attached base material Y3 having a film α3 (membrane thickness: 15 μm) consisting of the fluorinated polymer (S'-1) formed on the base material.

[Production of film-attached base material Y4]

The fluorinated polymer (S'-1) was deposited by a melt-extrusion method on a base material consisting of a polyethylene terephthalate (PET) film (melting point: 250 to 260°C) to obtain a film-attached base material Y4 having a film α1 (membrane thickness: 45 μm) consisting of the fluorinated polymer (S'-1) formed on the base material.

[Production of film-attached base material Y5]

The fluorinated polymer (S'-1) was deposited by a melt-extrusion method on a base material consisting of a polyethylene terephthalate (PET) film (melting point: 250 to 260°C) to obtain a film-attached base material Y5 having a film α2 (membrane thickness: 30 μm) consisting of the fluorinated polymer (S'-1) formed on the base material.

[Production of woven fabric]

49.8 denier yarns made of PTFE were used for the warp yarns and the weft yarns, and woven plainly to obtain woven fabric A1 so that the density of PTFE yarns became 90 yarns/inch. The fabric weight of the woven fabric A1 was 39.2 $g/m^2$. Here, the warp yarns and the weft yarns were constituted by slit yarns.

Woven fabrics A2 to A3 were produced in the same manner as the production of the woven fabric A1, except that the type and denier of the material constituting the warp yarns and the weft yarns, as well as the density and fabric weight of the woven fabric, were changed to the values listed in Table 1.

[Ex. 1]

The film-attached base material Y1/woven fabric A1/film-attached base material Y1 were overlapped in this order. Here, the film-attached base material Y1 was placed so that the film $\alpha$1 in the film-attached base material Y1 was in contact with the woven fabric A1.

After heating and pressing the respective overlapped members for 10 minutes by a flat press machine at a temperature of 160°C under a surface pressure of 30 $MPa/m^2$, the base materials on both sides were peeled off at a temperature of 50°C to obtain a precursor membrane.

The precursor membrane was immersed in a solution of dimethyl sulfoxide/potassium hydroxide/water = 30/5.5/64.5 (mass ratio) at 95°C for 30 minutes to hydrolyze the groups in the precursor membrane which can be converted to sulfonic acid type functional groups to convert them to K-type sulfonic acid type functional groups, followed by washing with water. Then, the obtained membrane was immersed in 1M sulfuric acid to convert the terminal groups from K-type to H-type, followed by drying to obtain a solid polymer electrolyte membrane.

Using the obtained solid polymer electrolyte membrane, measurement of the membrane thickness of the solid polymer electrolyte membrane and an evaluation test for an electrolysis voltage were conducted. The results are shown in Table 1.

[Ex. 2 to 4]

Except that the types of the film-attached base material and the woven fabric were changed as described in Table 1, in the same manner as in Ex. 1, solid polymer electrolyte membranes were prepared, and measurement of the membrane thicknesses of the solid polymer electrolyte membranes and an evaluation test for an electrolysis voltage were conducted.

[Ex. 5]

The film-attached base material Y4/woven fabric A1/film-attached base material Y4 were overlapped in this order. Here, the film-attached base material Y4 was placed so that the film $\alpha$1 in the film-attached base material Y4 was in contact with the woven fabric A1.

After heating and pressing the respective overlapped members for 10 minutes in a flat press machine at a temperature of 200°C under a surface pressure of 30 $MPa/m^2$, the base materials on both sides were peeled off at a temperature of 50°C to obtain a precursor membrane.

Except that the precursor membrane obtained in this manner was used, in the same manner as in Ex. 1, a solid polymer electrolyte membrane was prepared, measurement of the membrane thickness of the solid polymer electrolyte membrane and an evaluation test for an electrolysis voltage were conducted.

[Ex. 6 to 7]

Except that the types of the film-attached base material and the woven fabric were changed as described in Table 1, in the same manner as in Ex. 5, solid polymer electrolyte membranes were prepared, and measurement of the membrane thicknesses of the solid polymer electrolyte membranes and an evaluation test for an electrolysis voltage were conducted.

The "denier count (g/9000m)" in Table 1 represents the denier count of the warp yarns and the weft yarns constituting the woven fabric. In all of Ex. 1 to 7, the denier counts of the warp yarns and the weft yarns constituting the woven fabric were the same.

[Table 1]

| | Film | | Base material | Film-attached base material | | Ion exchange capacity of fluorinated polymer (meq/g dry resin) |
|---|---|---|---|---|---|---|
| | Type | Monomer species | Type | Type | Total membrane thickness of film-attached base material (μm) | |
| Ex. 1 | α1 | TFE/monomer (X) | LLDPE | Y1 | 90 | 1.25 |
| Ex. 2 | α1 | TFE/monomer (X) | LLDPE | Y1 | 90 | 1.25 |
| Ex. 3 | α2 | TFE/monomer (X) | LLDPE | Y2 | 60 | 1.25 |
| Ex. 4 | α3 | TFE/monomer (X) | LLDPE | Y3 | 30 | 1.25 |
| Ex. 5 | α1 | TFE/monomer (X) | PET | Y4 | 90 | 1.25 |
| Ex. 6 | α2 | TFE/monomer (X) | PET | Y5 | 60 | 1.25 |
| Ex. 7 | α1 | TFE/monomer (X) | PET | Y4 | 90 | 1.25 |

[Table 1 (Continued)]

| | Woven fabric | | | | | | Uneven structure | | | Electrolysis voltage evaluation test |
|---|---|---|---|---|---|---|---|---|---|---|
| | Type | Fabric weight ($g/m^2$) | Denier count (g/9000m) | Density (yarns/inch) | Material | Aperture ratio (%) | $TA_{AVE}$ | $TB_{AVE}$ | $TA_{AVE}/TB_{AVE}$ | Judgement |
| Ex. 1 | A1 | 39.2 | 49.8 | 90 | PTFE | 63.7 | 148 | 90 | 1.64 | ○ |
| Ex. 2 | A2 | 16.3 | 18.6 | 100 | PFA | 74.3 | 125 | 90 | 1.38 | ○ |
| Ex. 3 | A1 | 39.2 | 49.8 | 90 | PTFE | 63.7 | 118 | 60 | 1.97 | ◎ |
| Ex. 4 | A2 | 16.3 | 18.6 | 100 | PFA | 74.3 | 65 | 30 | 2.15 | ◎ |
| Ex. 5 | A1 | 39.2 | 49.8 | 90 | PTFE | 63.7 | 103 | 90 | 1.14 | × |
| Ex. 6 | A3 | 24.4 | 18.6 | 150 | PFA | 62.9 | 65 | 60 | 1.08 | × |
| Ex. 7 | A2 | 16.3 | 18.6 | 100 | PFA | 74.3 | 110 | 110 | 1.00 | × |

As shown in Table 1, it was confirmed that in a membrane electrode assembly containing a solid polymer electrolyte membrane, if the solid polymer electrolyte membrane contains a woven fabric with an aperture ratio of at least 50% and the ratio $TA_{AVE}/TB_{AVE}$ of the solid polymer electrolyte membrane is at least 1.20, the increase in electrolysis voltage can be reduced even when the current density is increased (Ex. 1 to 4).

REFERENCE SYMBOLS

10: Solid polymer electrolyte membrane
12: Electrolyte
14: Woven fabric
14a, 14b, 14c: Yarns A
14A, 14B, 14C: Yarns B
20: Membrane electrode assembly
22: Anode
24: Cathode
26: Catalyst layer
28: Gas diffusion layer
TA: Maximum membrane thickness
TB: Minimum membrane thickness
C1, C2: Locations

The entire disclosure of Japanese Patent Application No. 2020-148732 filed on September 4, 2020 including specification, claims, drawings and summary is incorporated herein by reference in its entirety.

**Claims**

1. A membrane electrode assembly comprising an anode having a catalyst layer, a cathode having a catalyst layer, and a solid polymer electrolyte membrane disposed between the anode and the cathode, wherein

    the solid polymer electrolyte membrane comprises a fluorinated polymer having ion-exchange groups and a woven fabric,
    the woven fabric consists of yarns A extending in one direction and yarns B extending in a direction orthogonal to the yarns A,
    the aperture ratio of said woven fabric is at least 50%, and
    the maximum membrane thickness TA and the minimum membrane thickness TB of the solid polymer electrolyte membrane are measured at each of ten different cross-sections of the solid polymer electrolyte membrane when the solid polymer electrolyte membrane is cut in a direction parallel to the direction in which the yarns A in the solid polymer electrolyte membrane extend and at the midpoint between the yarns A, and
    further, the maximum membrane thickness TA and the minimum membrane thickness TB of the solid polymer electrolyte membrane are measured at each of ten different cross-sections when the solid polymer electrolyte membrane is cut in a direction parallel to the direction in which the yarns B in the solid polymer electrolyte membrane extend and at the midpoint between the yarns B, whereby
    the ratio $TA_{AVE}/TB_{AVE}$ of the average maximum membrane thickness $TA_{AVE}$ obtained by arithmetically averaging the 20 TA obtained to the average minimum membrane thickness $TB_{AVE}$ obtained by arithmetically averaging the 20 TB obtained, is at least 1.20.

2. The membrane electrode assembly according to Claim 1, wherein the ion exchange capacity of the fluorinated polymer is from 0.90 to 2.00 meq/g dry resin.

3. The membrane electrode assembly according to Claim 1 or 2, wherein the denier count of the yarns A and the denier count of the yarns B are each independently from 15 to 50.

4. The membrane electrode assembly according to any one of Claims 1 to 3, wherein the ratio $TA_{AVE}/TB_{AVE}$ is at least 1.95.

5. The membrane electrode assembly according to any one of Claims 1 to 4, wherein said yarns A and said yarns B are each independently made of at least one material selected from the group consisting of polytetrafluoroethylene, a tetrafluoroethylene-perfluoroalkyl vinyl ether copolymer, polyether ether ketone and polyphenylene sulfide.

6. The membrane electrode assembly according to any one of Claims 1 to 5, wherein the densities of said yarns A and said yarns B are each independently from 70 to 150 yarns/inch.

7. The membrane electrode assembly according to any one of Claims 1 to 6, wherein the ion-exchange groups are sulfonic acid type functional groups.

8. The membrane electrode assembly according to any one of Claims 1 to 7, wherein the fluorinated polymer contains units based on a fluorinated olefin and units having sulfonic acid type functional groups and fluorine atoms.

9. The membrane electrode assembly according to Claim 8, wherein the fluorinated olefin is a $C_{2-3}$ fluoroolefin having at least one fluorine atom in the molecule.

10. The membrane electrode assembly according to Claim 8 or 9, wherein the units having sulfonic acid type functional groups and fluorine atoms are units represented by the following formula (1):

Formula (1): $-[CF_2-CF(-L-(SO_3M)_n)]-$

(wherein, L is an n+1-valent perfluorohydrocarbon group that may contain an etheric oxygen atom, M is a hydrogen atom, an alkali metal or a quaternary ammonium cation, n is 1 or 2, and when n is 2, the multiple M may be the same or different.)

11. A water electrolysis apparatus including a membrane electrode assembly as claimed in any one of Claims 1 to 10.

12. An electrolytic hydrogenation apparatus including a membrane electrode assembly as claimed in any one of Claims 1 to 10.

13. A solid polymer electrolyte membrane comprising a fluorinated polymer having ion-exchange groups and a woven fabric, wherein

the woven fabric consists of yarns A extending in one direction and yarns B extending in a direction orthogonal to the yarns A,
the aperture ratio of said woven fabric is at least 50%, and
the maximum membrane thickness TA and the minimum membrane thickness TB of the solid polymer electrolyte membrane are measured at each of ten different cross-sections of the solid polymer electrolyte membrane when the solid polymer electrolyte membrane is cut in a direction parallel to the direction in which the yarns A in the solid polymer electrolyte membrane extend and at the midpoint between the yarns A, and
further, the maximum membrane thickness TA and the minimum membrane thickness TB of the solid polymer electrolyte membrane are measured for each of ten different cross-sections of the solid polymer electrolyte membrane when the solid polymer electrolyte membrane is cut in a direction parallel to the direction in which the yarns B in the solid polymer electrolyte membrane extend and at the midpoint between the yarns B, whereby the ratio $TA_{AVE}/TB_{AVE}$ of the average maximum membrane thickness $TA_{AVE}$ obtained by arithmetically averaging the 20 TA obtained to the average minimum membrane thickness $TB_{AVE}$ obtained by arithmetically averaging the 20 TB obtained, is at least 1.20.

14. The solid polymer electrolyte membrane according to Claim 13, wherein the ion exchange capacity of said fluorinated polymer is from 0.90 to 2.00 meq/g dry resin.

15. The solid polymer electrolyte membrane according to Claim 13 or 14, wherein the ratio $TA_{AVE}/TB_{AVE}$ is at least 1.95.

16. The solid polymer electrolyte membrane according to any one of Claims 13 to 15, to be used in a membrane electrode assembly.

Fig. 1

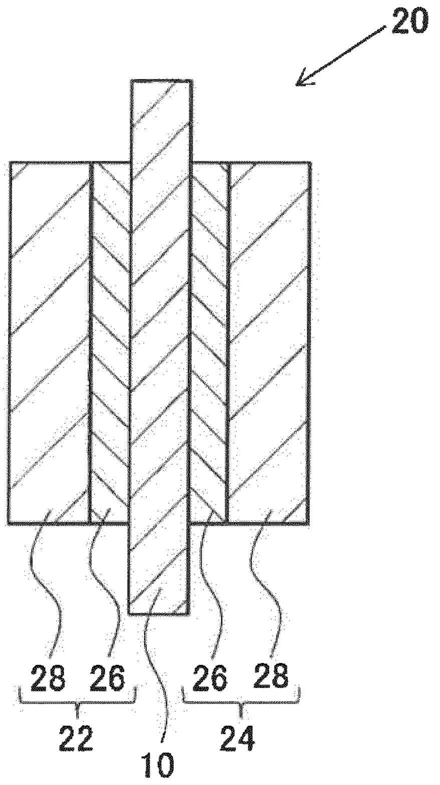


Fig. 2

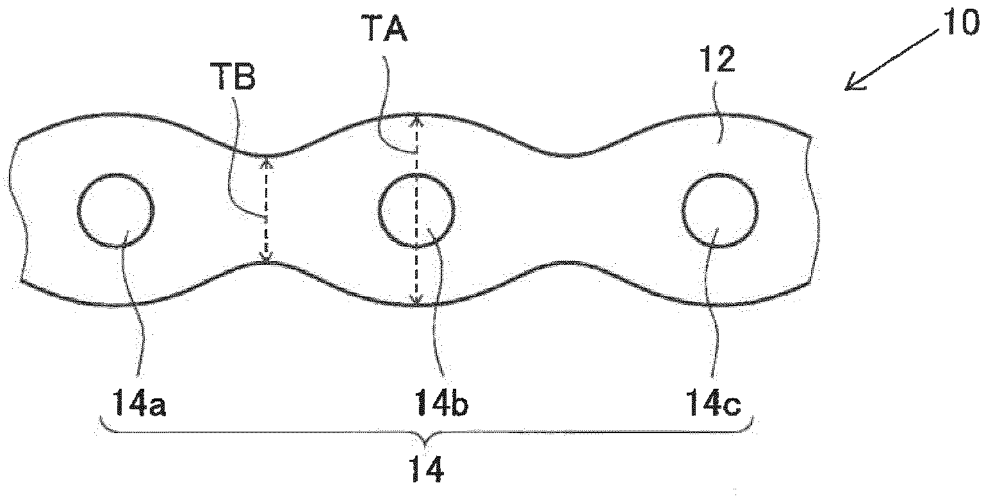

Fig. 3

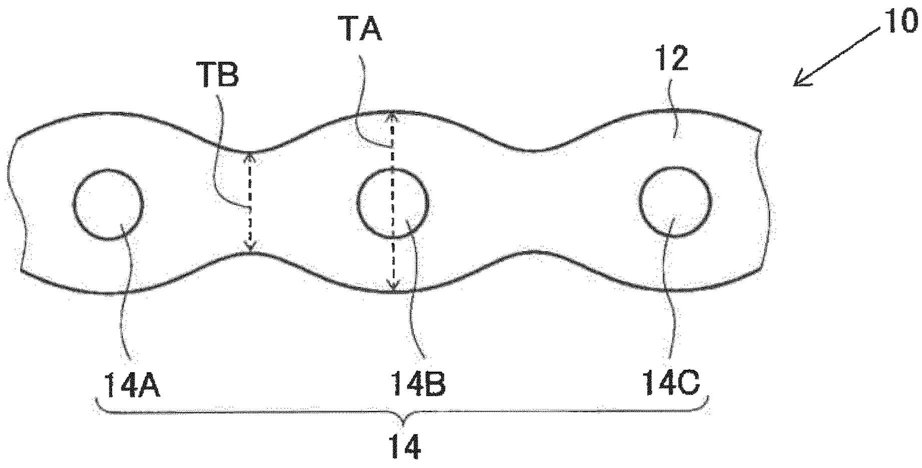


Fig. 4

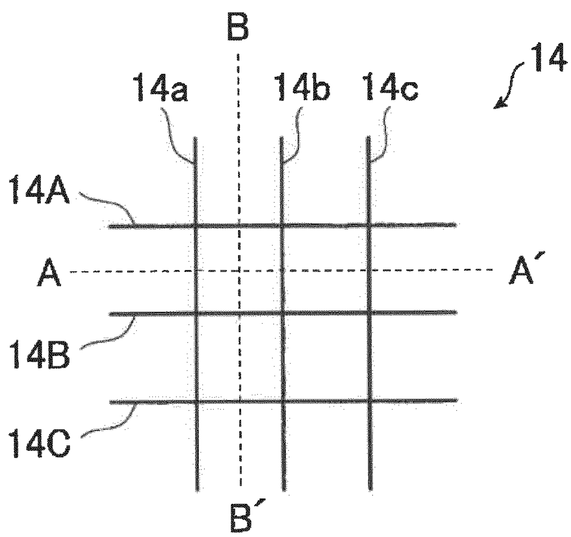


Fig. 5

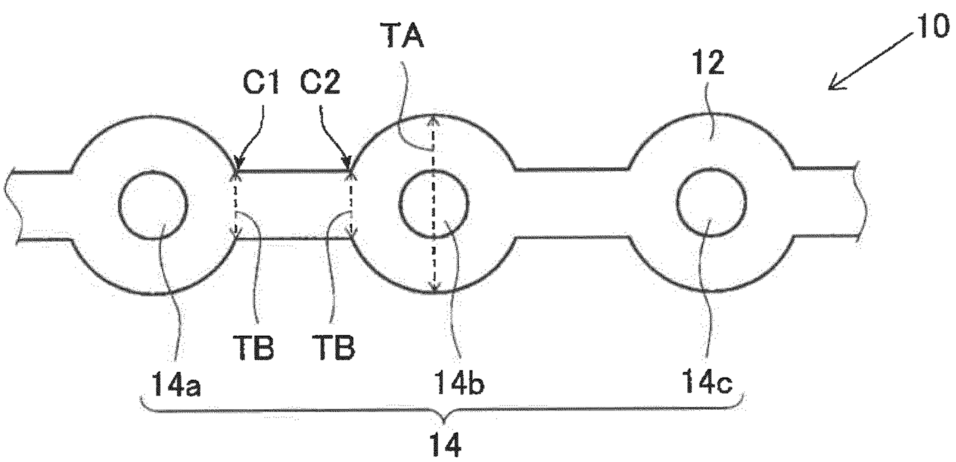

## INTERNATIONAL SEARCH REPORT

International application No.
**PCT/JP2021/032352**

### A. CLASSIFICATION OF SUBJECT MATTER

***C25B 9/23***(2021.01)i; ***C25B 13/02***(2006.01)i; ***C25B 13/04***(2021.01)i; ***C25B 13/08***(2006.01)i
FI: C25B9/23; C25B13/02 301; C25B13/04 301; C25B13/08 302

According to International Patent Classification (IPC) or to both national classification and IPC

### B. FIELDS SEARCHED

Minimum documentation searched (classification system followed by classification symbols)

C25B1/00-15/08

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2018/139028 A1 (ASAHI KASEI KABUSHIKI KAISHA) 02 August 2018 (2018-08-02) paragraphs [0002]-[0003], [0013]-[0017], [0020]-[0027], [0053]-[0054], [0059], [0085], [0088], fig. 4-8 | 1-11, 13-16<br>12 |
| Y | JP 2016-065286 A (NAT UNIV YOKOHAMA) 28 April 2016 (2016-04-28) paragraph [0021] | 12 |
| A | JP 4-308096 A (ASAHI GLASS CO LTD) 30 October 1992 (1992-10-30) | 1-16 |
| A | JP 2013-163859 A (ASAHI KASEI CHEMICALS CORP) 22 August 2013 (2013-08-22) | 1-16 |
| A | JP 2018-513912 A (CALERA CORPORATION) 31 May 2018 (2018-05-31) | 1-16 |
| A | WO 2020/162511 A1 (AGC INC) 13 August 2020 (2020-08-13) | 1-16 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 November 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/032352**

| Patent document cited in search report | Publication date (day/month/year) | Patent family member(s) | Publication date (day/month/year) |
|---|---|---|---|
| WO 2018/139028 A1 | 02 August 2018 | US 2019/0100845 A1<br>paragraphs [0002]-[0003], [0061]-[0077], [0096]-[0112], [0145]-[0153], [0187]-[0189], fig. 4-8<br>EP 3575443 A1<br>CA 3018495 A<br>KR 10-2018-0118713 A<br>CN 109790636 A<br>TW 201827129 A<br>RU 2723552 C | |
| JP 2016-065286 A | 28 April 2016 | US 2017/0292198 A1<br>paragraph [0040]<br>WO 2016/047629 A1<br>EP 3199665 A<br>CA 2962180 A<br>CN 106715759 A<br>KR 10-2017-0063694 A | |
| JP 4-308096 A | 30 October 1992 | US 5264100 A<br>EP 507235 A2<br>DE 69220528 C<br>CN 1065496 A<br>CA 2063353 A1 | |
| JP 2013-163859 A | 22 August 2013 | CN 103243345 A | |
| JP 2018-513912 A | 31 May 2018 | US 2016/0273116 A1<br>WO 2016/149365 A1<br>EP 3271501 A1<br>CN 107532314 A<br>BR 112017019072 A | |
| WO 2020/162511 A1 | 13 August 2020 | (Family: none) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020162511 A
- JP 2020148732 A